# EUROPEAN PATENT APPLICATION

(11) **EP 3 326 790 A1**
(43) Date of publication of application: **30.05.2018**
(21) Application number: 16842013.1
(22) Date of filing: 02.09.2016
(51) Int. Cl.: B29C 67/00, B33Y 10/00, B33Y 30/00, B33Y 50/02

(54) **DEVICE AND METHOD FOR MANUFACTURING THREE-DIMENSONAL SHAPED OBJECT AND MATERIAL SUPPLY UNIT USED IN DEVICE FOR MANUFACTURING THREE-DIMENTIONAL SHAPED OBJECT**

(30) Priority: 04.09.2015 JP 2015174910
(71) Applicant: JSR Corporation, Minato-ku Tokyo 105-8640 (JP)
(72) Inventor: KOBE Takashi, Tokyo 105-8640 (JP); KURIKI Toshikazu, Tokyo 105-8640 (JP); KAWASE Reiji, Tokyo 105-8640 (JP); IMAMURA Masahiro, Tokyo 105-8640 (JP)
(74) Representative: Kramer Barske Schmidtchen Patentanwälte PartG mbB
(86) International application number: PCT/JP2016/075844
(87) International publication number: WO 2017/038984

(57) **Abstract**

Provided are a manufacturing apparatus and method for a three-dimensional object, and a material supply unit to be used in the manufacturing apparatus for a three-dimensional object which make it possible to obtain an intended three-dimensional object formed by accumulating a shaping material and to hardly form an unnecessary portion on the surface of the three-dimensional object. A nozzle part (4) for ejecting a shaping material (81) is provided with a shut-off pin (5) for opening/closing a channel end part (41) from inside E1. When closing the channel end part (41), a stop position x(mm) of a tip (501) of the shut-off pin (5) with respect to the position of a tip (411) of the channel end part (41) satisfies a relation of -3D≦x≦6D wherein an equivalent diameter of the channel end part (41) of the nozzle part 4 is represented as D(mm) .

## Description

### TECHNICAL FIELD

The present invention relates to a manufacturing apparatus and method for a three-dimensional object, and a material supply unit to be used in the manufacturing apparatus.

### BACKGROUND ART

As one method for shaping a three-dimensional object, a hot-melt lamination method is known. In an apparatus according to the hot-melt lamination method, an elongated solid resin called a filament is fed by a feeding section such as a driving roller to a nozzle section equipped with a heater, and the solid resin that is melted and ejected from the nozzle section is accumulated on a stage to shape a three-dimensional object. The apparatus according to the hot-melt lamination method makes it possible to shape a three-dimensional object with a simple apparatus configuration. However, if, for example, the solid resin is composed of a soft material, the solid resin may be buckled when being fed by the driving roller or the like.

On the other hand, as for a technique for ejecting a molten resin using an extruder equipped with a screw, and accumulating the ejected molted resin on a stage, for example, Patent Document 1 discloses such a technique. Patent Document 1 describes an apparatus for manufacturing a three-dimensional object in which a conveying screw gives a pressure to a resin material to discharge the resin material from a discharge unit sequentially in the form of droplets, and the resin material thus discharged is accumulated to produce the three-dimensional object.

### PRIOR ART LITERATURE

### Patent Document

Patent Document 1 JP-T-2015-501738

### SUMMARY OF THE INVENTION

### PROBLEM TO BE SOLVED BY THE INVENTION

However, in the apparatus described in Patent Document 1 and others, it is intended to intermittently discharge the resin in the form of droplets. In case a shaping material with a certain length is used instead of the resin in the form of droplets to shape a three-dimensional object, part of the shaping material may extend from the nozzle section in a stringing state at the time of intermitting (temporarily stopping) ejection of the shaping material from the nozzle section. There occurs a problem in that a thread-like shaping material thinner than the shaping material to be ejected may be adhered to the shaping material that has been ejected, and may remain on the surface of the three-dimensional object as an unnecessary portion.

The present invention has been made in view of this background, and has been achieved to provide a manufacturing apparatus and method for a three-dimensional object, and a material supply unit to be used in the manufacturing apparatus for a three-dimensional object which make it possible to obtain an intended three-dimensional object formed by accumulating the shaping material and to hardly form an unnecessary portion on the surface of the three-dimensional object.

### MEANS FOR SOLVING THE PROBLEM

One aspect of the present invention is a manufacturing apparatus for a three-dimensional object including:
a material supply unit that has a nozzle part configured to eject a shaping material for shaping the three-dimensional object;
a stage on which the shaping material ejected from a channel end part of the nozzle part is to be accumulated;
a relative movement device that is configured to relatively move the stage and the material supply unit in three dimensions; and
a control computer that is configured to control operation of the relative movement device, wherein
the nozzle part is provided with a shut-off pin configured to open and close the channel end part of the nozzle part from an inside thereof,
the control computer is configured to control the shut-off pin to close the channel end part of the nozzle part so as to temporarily stop ejection of the shaping material, and to open the channel end part of the nozzle part so as to eject the shaping material, and
the channel end part of the nozzle part has an equivalent diameter D(mm) expressed by an equation of D = 4S/B using an opening area S(mm²) of the channel end part and a wetted perimeter B(mm) as a perimeter of a channel wall surface of the channel end part, a tip of the shut-off pin is stopped at a stop position x(mm) to allow the shut-off pin to close the channel end part, and the equivalent diameter D and the stop position x satisfy a relation of -3D≦x≦6D wherein the stop position x is set to 0(mm) as a reference in case the stop position x is at a tip position of the channel end part, the stop position x is set to a negative value in case the stop position x is positioned inside of the tip position of the channel end part, and the stop position x is set to a positive value in case the stop position x is positioned outside of the tip position of the channel end part.

Another aspect of the present invention is a manufacturing method for a three-dimensional object including using a manufacturing apparatus for the three-dimensional object, the manufacturing apparatus including:
a material supply unit that has a nozzle part configured to eject a shaping material for shaping the three-dimensional object;
a stage on which the shaping material ejected from a channel end part of the nozzle part is to be accumulated;
a relative movement device that is configured to relatively move the stage and the material supply unit in three dimensions; and
a control computer that is configured to control operation of the relative movement device, wherein
the nozzle part is provided with a shut-off pin configured to open and close the channel end part of the nozzle part from an inside thereof, and the channel end part of the nozzle part has an equivalent diameter D(mm) expressed by an equation of D = 4S/B using an opening area S(mm²) of the channel end part and a wetted perimeter B(mm) as a perimeter of a channel wall surface of the channel end part, a tip of the shut-off pin is stopped at a stop position x(mm) to allow the shut-off pin to close the channel end part, and the equivalent diameter D and the stop position x satisfy a relation of -3D≦x≦6D wherein the stop position x is set to 0(mm) as a reference in case the stop position x is at a tip position of the channel end part, the stop position x is set to a negative value in case the stop position x is positioned at inside of the tip position of the channel end part, and the stop position x is set to a positive value in case the stop position x is positioned at outside of the tip position of the channel end part,
wherein the shaping material is ejected from the channel end part at a time of opening the channel end part of the nozzle part with the shut-off pin, and ejection of the shaping material is temporarily stopped at a time of closing the channel end part of the nozzle part with the shut-off pin, thereby manufacturing the three-dimensional object.

Still another aspect of the present invention is a material supply unit to be used in a manufacturing apparatus for a three-dimensional object, the manufacturing apparatus including: a stage on which the shaping material ejected from a channel end part of the nozzle part is to be accumulated; a relative movement device that is configured to relatively move the stage and the material supply unit in three dimensions; and a control computer that is configured to control operation of the relative movement device, and is configured to control the shut-off pin to close the channel end part of the nozzle part so as to temporarily stop ejection of the shaping material and to open the channel end part of the nozzle part so as to eject the shaping material, the material supply unit including:
a nozzle part that is configured to eject a shaping material for shaping the three-dimensional object; and
a shut-off pin that is provided in the nozzle part and is configured to open and close a channel end part of the nozzle part from an inside thereof,
wherein the channel end part of the nozzle part has an equivalent diameter D(mm) expressed by an equation of D = 4S/B using an opening area S(mm²) of the channel end part and a wetted perimeter B(mm) as a perimeter of a channel wall surface of the channel end part, a tip of the shut-off pin is stopped at a stop position x(mm) to allow the shut-off pin to close the channel end part, and the equivalent diameter D and the stop position x satisfy a relation of -3D≦x≦6D wherein the stop position x is set to 0(mm) as a reference in case the stop position x is at a tip position of the channel end part, the stop position x is set to a negative value in case the stop position x is positioned inside of the tip position of the channel end part, and the stop position x is set to a positive value in case the stop position x is positioned outside of the tip position of the channel end part.

### EFFECTS OF THE INVENTION

The manufacturing apparatus for a three-dimensional object has a feature in shaping a three-dimensional object by accumulating pieces of the shaping material ejected from the channel end part of the nozzle part with a certain length. And in a configuration wherein an operation to temporarily stop the ejection of the shaping material from the channel end part of the nozzle part, and an operation to eject the shaping material from the channel end part of the nozzle part are controlled by sliding the shut-off pin, a dimensional relation between the channel end part of the nozzle part and the shut-off pin is defined.

Specifically, the equivalent diameter D(mm) of the channel end part of the nozzle part is expressed by the equation of D = 4S/B using the opening area S(mm²) of the channel end part and the wetted perimeter B(mm) of the channel end part of the nozzle part, and the stop position x(mm) of the tip of the shut-off pin at the time of closing the channel end part is defined. At the time of closing the channel end part, the stop position x of the tip of the shut-off pin may be positioned inside or outside of the tip position of the channel end part. The stop position x is represented by the relation of -3D≦x≦ 6D with assigned positive/negative sign(s).

In case the stop position x of the tip of the shut-off pin is positioned inside of the tip position of the channel end part at the time of closing the channel end part, the stop position x takes a value of -3D or more, in other words, the distance from the tip of the channel end part to the tip of the shut-off pin positioned inward from the tip of the channel end part is set to three-times or less the equivalent diameter D of the channel end part of the nozzle part. If the stop position x of the tip of the shut-off pin at the time of closing the channel end part takes a value of less than -3D, there is a risk that the shaping material ejected from the channel end part cannot be satisfactorily separated from the shaping material remaining in the channel end part at the time of temporarily stopping ejection of the shaping material from the channel end part, and part of the shaping material may extend from the nozzle part in a stringing state.

In case the stop position x of the tip of the shut-off pin is positioned outside of the tip position of the channel end part at the time of closing the channel end part, the stop position x takes a value of 6D or less, in other words, the distance from the tip of the channel end part to the tip of the shut-off pin positioned outward from the tip of the channel end part is set to six-times or less the equivalent diameter D of the channel end part of the nozzle part. In case the stop position x of the tip of the shut-off pin at the time of closing the channel end part takes a value of more than 6D, the distance between the tip of the channel end part and the stage is made larger than it need be in order to avoid contact between the shut-off pin and the stage. Thus, there is a risk that the shaping precision in the three-dimensional object may be deteriorated.

The manufacturing apparatus for a three-dimensional object makes it possible for the part of the shaping material to hardly adhere to the three-dimensional object in a stringing state by properly setting a positional relation between the tip of the channel end part and the tip of the shut-off pin at the time of closing the channel end part.

Also, the manufacturing apparatus makes it possible to obtain an intended three-dimensional object that is formed of accumulated shaping material by relatively moving the stage and the material supply unit in three dimensions with the relative movement device, and repeating ejection of the shaping material and temporary stop of the ejection alternately.

As described above, the manufacturing apparatus for a three-dimensional object makes it possible to obtain the intended three-dimensional object that is formed of the accumulated shaping material, and makes it possible to hardly form an unnecessary portion on the surface of the three-dimensional object.

The manufacturing method for a three-dimensional object also makes it possible for the part of the shaping material to hardly adhere to the three-dimensional object in a stringing state in the same way as in the manufacturing apparatus.

Thus, the manufacturing method for a three-dimensional object makes it possible to obtain the intended three-dimensional object that is formed of the accumulated shaping material, and makes it possible to hardly form an unnecessary portion on the surface of the three-dimensional object in the same way as in the manufacturing apparatus.

The material supply unit to be used in the manufacturing apparatus for a three-dimensional object also makes it possible for the part of the shaping material to hardly adhere to the three-dimensional object in a stringing state in the same way as in the manufacturing apparatus.

Thus, the material supply unit to be used in the manufacturing apparatus for a three-dimensional object makes it possible to obtain the intended three-dimensional object that is formed of the accumulated shaping material, and makes it possible to hardly form an unnecessary portion on the surface of the three-dimensional object in the same way as in the manufacturing apparatus.

### BRIEF DESCRIPTION OF THE DRAWINGS

Figure 1 is an illustration showing a manufacturing apparatus for a three-dimensional object in the state of ejecting a shaping material from a channel end part of a nozzle part in accordance with Embodiment 1.
Figure 2 is an illustration showing the manufacturing apparatus for a three-dimensional object in the state of temporarily stopping ejection of the shaping material from the channel end part of the nozzle part in accordance with Embodiment 1.
Figure 3 is an illustration showing a vicinity of the channel end part of the nozzle part in the state of ejecting the shaping material in accordance with Embodiment 1.
Figure 4 is an illustration showing the vicinity of the channel end part of the nozzle part in the state of temporarily stopping ejection of the shaping material in accordance with Embodiment 1.
Figure 5 is an illustration showing a shape of the channel end part of the nozzle part in accordance with Embodiment 1.
Figure 6 is an illustration showing another shape of the channel end part of the nozzle part in accordance with Embodiment 1.
Figure 7 is an illustration showing a vicinity of a channel end part of a nozzle part in the state of ejecting a shaping material in accordance with Embodiment 2.
Figure 8 is an illustration showing another cooling means arranged in a vicinity of the channel end part of the nozzle part in accordance with Embodiment 2.
Figure 9 is an illustration showing a vicinity of a channel end part of a nozzle part in the state of ejecting a shaping material in accordance with Embodiment 3.
Figure 10 is an illustration showing the vicinity of the channel end part of the nozzle part in the state of temporarily stopping ejection of the shaping material in accordance with Embodiment 3.

### MODES FOR CARRYING OUT THE INVENTION

Preferred embodiments of the aforementioned manufacturing apparatus and method for a three-dimensional object, and the aforementioned material supply unit to be used in the manufacturing apparatus for a three-dimensional object will be described in detail with reference to the drawings.

### Embodiment 1

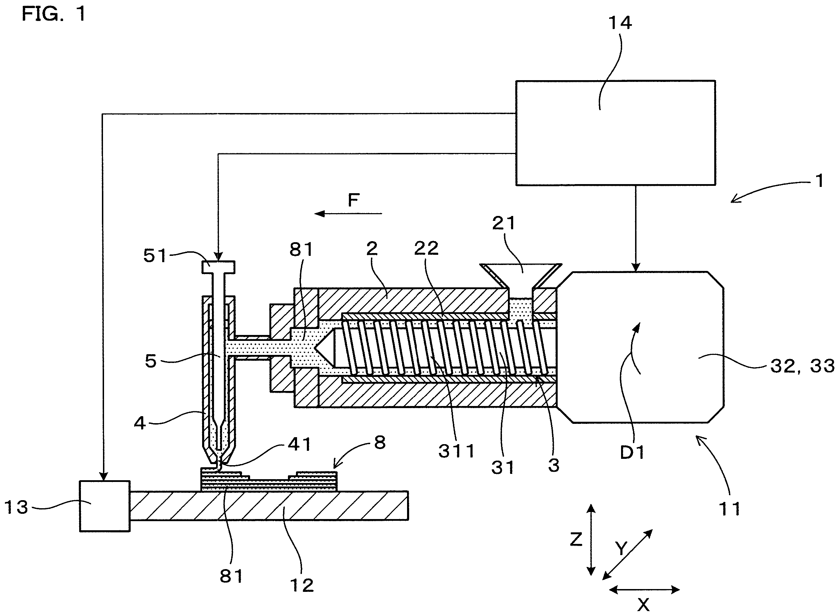

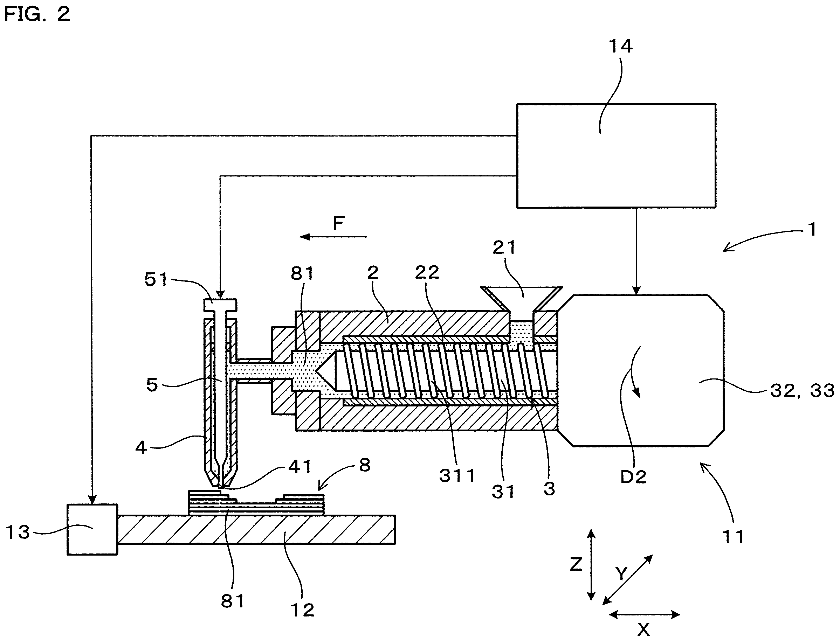

A manufacturing apparatus 1 for a three-dimensional object 8, as shown in Figures 1 and 2, is provided with a material supply unit 11, a stage 12, a relative movement device 13, and a control computer 14. The material supply unit (an apparatus body) 11 includes a cylinder part 2 configured to store a shaping material 81 for shaping the three-dimensional object 8, a feeding part 3 configured to feed the shaping material 81 stored in the inside of the cylinder part 2, and a nozzle part 4 configured to eject the shaping material 81 fed by the feeding part 3. The stage 12 is configured that the shaping material 81 ejected from the channel end part 41 of the nozzle part 4 is accumulated thereon. The relative movement device 13 relatively moves the stage 12 and the material supply unit 11 in three dimensions. The control computer 14 is configured to control operation of the feeding part 3 and the relative movement device 13.

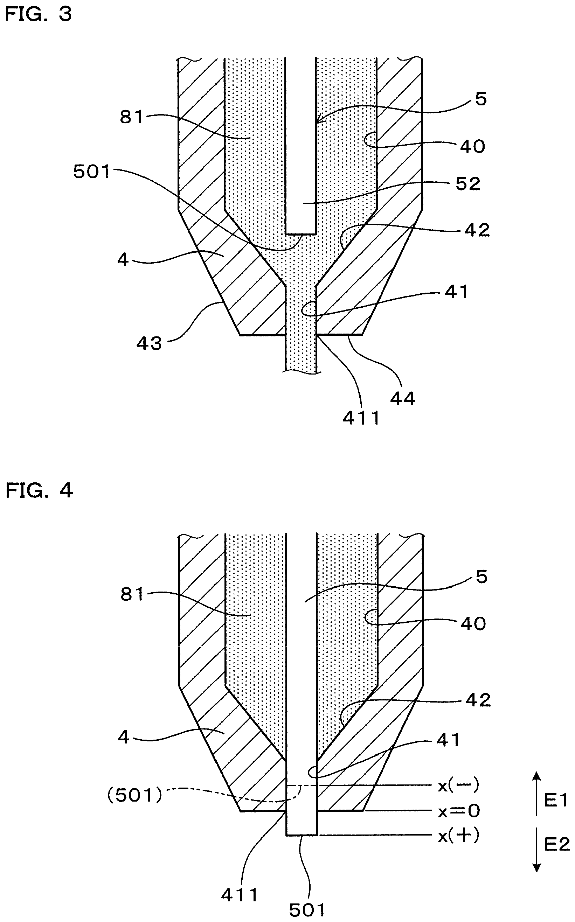

The nozzle part 4, as shown in Figures 3 and 4, is provided with a shut-off pin 5 that is slid along a forming direction of the channel end part 41 of the nozzle part 4 to open and close the channel end part 41 of the nozzle part 4 from inside E1. The control computer 14 is configured to control the shut-off pin 5 to close the channel end part 41 of the nozzle part 4 so as to temporarily stop ejection of the shaping material 81 as shown in Figure 4, and open the channel end part 41 of the nozzle part 4 so as to eject the shaping material 81 as shown in Figure 3. A stop position x(mm) of a tip 501 of the shut-off pin 5 with respect to the position of a tip 411 of the channel end part 4 at the time of closing the shut-off pin 5 satisfies a relation of -3D≦x≦6D wherein D(mm) represents an equivalent diameter of the channel end part 41 of the nozzle part. Specifically, the stop position x(mm) of the tip 501 of the shut-off pin 5 preferably satisfies a relation of -2D≦x≦3D. More specifically, the stop position x(mm) of the tip 501 of the shut-off pin 5 preferably satisfies a relation of -D≦ x≦10(mm), more preferably satisfies a relation of -D≦x≦ 6(mm), and furthermore preferably satisfies a relation of -D≦x≦3 (mm) . In addition, the equivalent diameter D(mm) preferably satisfies a relation of 0.1 (mm) ≦D≦10 (mm) .

Here, the equivalent diameter D(mm) of the channel end part 41 of the nozzle part 4 is expressed by an equation of D = 4S/B using an opening area S(mm²) of the channel end part 41 of the nozzle part 4 and a wetted perimeter B(mm) as a perimeter of a channel wall surface of the channel end part 41 of the nozzle part 4. As shown in Figure 4, the stop position x of the tip 501 of the shut-off pin 5 at the time of closing the channel end part 41 is defined to 0(mm) as a reference in case the stop position x is at the tip position 411 of the channel end part 41, takes a negative value in case the stop position x is positioned inside E1 of the tip position 411 of the channel end part 4, and takes a positive value in case the stop position x is positioned outside E2 of the tip position 411 of the channel end part 4.

In the same figure, the stop position x positioned outside E2 of the tip position 411 of the channel end part 4 is indicated by a solid line, and the stop position x positioned inside E1 of the tip position 411 of the channel end part 4 is indicated by a chain double-dashed line.

Hereinafter, the manufacturing apparatus 1 for the three-dimensional object 8, the manufacturing method for the three-dimensional object 8, and the material supply unit 11 to be used in the manufacturing apparatus 1 for the three-dimensional object 8 will be described in detail.

The manufacturing apparatus 1 for the three-dimensional object 8 is advantageous particularly in the case where a resin having a low viscosity in a molten state is used to produce the three-dimensional object 8.

Although the shaping material 81 to be used for shaping the three-dimensional object 8 has only to shape the three-dimensional object 8 and has no particular limitation, it is preferable to use a thermoplastic/thermosetting resin, and more preferable to use a thermoplastic resin because of its excellent shapability. The shaping material 81 placed from the channel end part 41 of the nozzle part 4 on the stage 12 is cooled and solidified on the stage 12 to form the three-dimensional object 8 as a final product.

As shown in Figures 1 and 2, the feeding part 3 of the material supply unit 11 is composed of a screw 31 having a spiral projection 311 formed on an outer periphery surface thereof to convey the shaping material 81. The screw 31 functions as a pressurizing part to pressurize the shaping material 81. The material supply unit 11 includes a motor 32 configured to rotate the screw 31 inside of the cylinder part 2 in both normal and reverse directions, and a moving device 33 configured to move the screw 31 forward and backward inside of the cylinder part 2. The screw 31 applies a pressure to the shaping material 81 inside of the cylinder part 2 when being driven by the motor 32 and rotated in a normal direction D1 to eject the shaping material 81 from the nozzle part 4, as shown in Figure 1. On the other hand, the screw 31 decreases the pressure to be applied to the shaping material 81 when being driven by the motor 32 and rotated in a reverse direction D2 as shown in Figure 2. It is noted that the moving device 33 can be configured to convert a rotation force of the rotor 32 to a thrust of the screw 31.

The cylinder part 2 is provided with a hopper 21 into which the shaping material 81 is charged, and a heater 22 for heating the shaping material 81 to melt it. In case a thermoplastic resin is used as the shaping material 81, a thermoplastic resin in a solid state such as a pellet or the like is charged into the hopper 21. The nozzle part 4 is mounted on an end of the cylinder part 2, the channel end part 41 of the nozzle part 4 is opened downward to place the shaping material 81 from above on the stage 12. The channel end part 41 of the nozzle part 4 has the shut-off pin 5 serving as a shut-off pin arranged therein. The shut-off pin 5 is made to slide along a forming direction of the channel end part 41 by an actuator 51 under operation control of the control computer 14. The shut-off pin 5 backs away from the channel end part 41 of the nozzle part 4 to inside E1 to thereby open the channel end part 41, and on the other hand, the shut-off pin 5 comes close to the channel end part 41 of the nozzle part 4 from inside E1 to thereby close the channel end part 41.

In order to eject the shaping material 81 from the nozzle part 4, the control computer 14, as shown in Figure 1, operates the actuator 51 to set back the shut-off pin 5 from the tip 411 of the channel end part 41 of the nozzle part 4, and at the same time operates the motor 32 to rotate the screw 31 in the normal direction D1. At that time, the control computer 14 makes the screw 31 rotate in the normal direction D1 to increase the pressure to be applied to the shaping material 81 inside of the cylinder part 2, and then makes the shut-off pin 5 open the channel end part 41 of the nozzle part 4 to thereby eject the shaping material 81 from the channel end part 41 of the nozzle part 4.

On the other hand, in order to temporarily stop the ejection of the shaping material 81 from the nozzle part 4, the control computer 14, as shown in Figure 2, operates the motor 32 to rotate the screw 31 in the reverse direction D2 to decrease the pressure to be applied to the shaping material 81 inside of the cylinder part 2, and then makes the shut-off pin 5 close the channel end part 41 of the nozzle part 4 to thereby temporarily stop the ejection of the shaping material 81 from the channel end part 41 of the nozzle pin 4.

Here, in order to temporarily stop the ejection of the shaping material 81 from the nozzle part 4, the screw 31 does not necessarily have to be rotated in the reverse direction D2. In other words, the screw 31 may continue to be rotated in the normal direction D1, or the rotation speed of the screw 31 rotating in the normal direction D1 may be slowed down. The rotating operation of the screw 31 can be varied in accordance with various factors such as the viscosity of the shaping material 81 in a molten state, the operation speed of the shut-off pin 5 for opening/closing the channel end part 41, and so on.

In addition, in order to temporarily stop the ejection of the shaping material 81 from the nozzle part 4, the control computer 14 may move the screw 31 toward the opposite direction to an ejecting direction F for the shaping material 81 by the moving device 33 instead of rotating the screw 31 in the reverse direction D2 by the motor 32. Further, in order to temporarily stop the ejection of the shaping material 81 from the nozzle part 4, the control computer 14 may move the screw 31 toward the opposite direction to the ejecting direction F for the shaping material 81 by the moving device 33 with rotating the screw 31 in the reverse direction D2 by the motor 32.

In order to continuously eject the shaping material 81, the control computer 14 controls the channel end part 41 of the nozzle part 4 to be opened during a predetermined period of time and allow the shaping material 81 to be continuously ejected therefrom. "Continuously" means that the period for ejecting the shaping material 81 from the nozzle part 4 is sufficiently longer than the period for temporarily stopping the ejection of the shaping material 81 from the nozzle part 4.

As a period of time for continuously ejecting the shaping material 81 from the nozzle part 4 in shaping the three-dimensional object 8 (referred to as an ejection time), five seconds or longer is ordinarily needed. It may also be set to five minutes or longer. The ejection time is ordinarily set to 20 hours or less, and may be set to five hours or less.

Further, the ejection time is ordinarily five-times or longer than a period of time for temporarily stopping the ejection of the shaping material 81 from the nozzle part 4 (referred to as a stopping time), and is preferably ten-times or longer than the stopping time. The ejection time is ordinarily 200,000 times or shorter than the stopping time, and is preferably ten thousand times or shorter than the stopping time.

Further, the control computer 14 may be configured to control a rotation speed of the screw 31 to be as intended. Specifically, in order to increase an ejection amount of the shaping material 81 to be ejected from the nozzle part 4, the control computer 14 controls the motor 32 to increase its rotation speed thereby increasing the rotation speed of the screw 31. On the other hands, in order to decrease the ejection amount of the shaping material 81 to be ejected from the nozzle part 4, the control computer 14 controls the motor 32 to decrease its rotation speed thereby decreasing the rotation speed of the screw 31. The control computer 14 may be configured to control the temperature inside of the cylinder part 2 to be as intended.

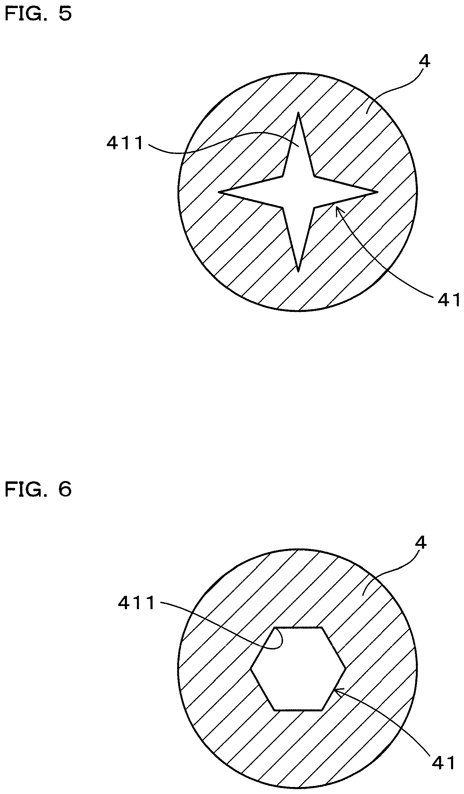

As shown in Figures 5 and 6, the channel end part 41 of the nozzle part4 may be formed into various shapes including a plurality of corner portions 411. In order that the shaping material 81 hardly drips down the channel end part 41 in the form of a thin thread at the time when the ejection of the shaping material 81 is temporarily stopped, the channel end part 41 may be formed not into a circular shape, but into a star shape including a plurality of acute corner portions 411 as shown in Figure 5 (a shape including a plurality of projected portions radially formed), or may be formed into a polygonal shape including the plurality of corner portions 411 as shown in Figure 6.

As shown in Figures 1 and 2, the stage 12 constitutes a placing table to place the shaping material 81 thereon. The relative movement device 13 is configured to move the stage 12 in the horizontal and perpendicular directions with respect to the material supply unit 11. The relative movement device 13 includes a mechanical section for moving the stage 12 along X-coordinate(X) in its horizontal direction, a mechanical section for moving the stage 12 along Y-coordinate(Y) orthogonal to the X-coordinate in its horizontal direction, and a mechanical section for moving the stage 12 along Z-coordinate(Z) in its perpendicular direction.

The control computer 14 links an action of the material supply unit 11 for ejecting the shaping material 81 with an action of the relative movement device 13 for moving the stage 12 so as to shape the three-dimensional object 8 on the stage 12. The control computer 14 controls the relative movement device 13 to move the stage 12 along the X-coordinate(X) and the Y-coordinate(Y) so as to form the three-dimensional object 8 into a flat shape. Further, the control computer 14 controls the relative movement device 13 to move the stage 12 along the Z-coordinate(Z) so as to accumulate a piece of the shaping material 81 on another piece of the shaping material 81 that has been placed, thereby forming the three-dimensional object 8 in its height direction. Still further, the control computer 14 controls the relative movement device 13 to move the stage 12 gradually downward so as to further accumulate the shaping material 81, thus forming the three-dimensional object 8 in its height direction.

It is noted that the relative movement device 13 can move the material supply unit 11 in three dimensions with respect to the stage 12.

The control computer 14 includes a shape setting section for setting a shape of the three-dimensional object 8 to be shaped, and a control section for controlling motions of the feeding part 3, the relative movement device 13, the shut-off pin 5 and the like upon receipt of instructions from the shape setting section. The control computer 14 is configured to shape the three-dimensional object 8 as required in accordance with the position for ejecting the shaping material 81, the length of the shaping material 81, and the accumulation number of the shaping material 81.

As shown in Figures 3 and 4, the channel end part 41 of the nozzle part 4 is preferably formed as a part, a cross section area of which is minimum in an end part of a material channel 40 configured to allow the shaping material 81 to pass therethrough. Specifically, a tapered channel part 42 is formed on the rear end side of the channel end part 41 in the material channel 40. The shut-off pin 5 is formed a little smaller than the inside diameter of the channel end part 41 of the nozzle part 4 so as to slide on the inner wall surface of the channel end part 41.

The channel end part 41 is formed to have a cross section similar to that of the shut-off pin 5. The cross sections of the channel end part 41 and the shut-off pin 5 in the present embodiment are formed into a circular shape. The shapes of the cross sections of the channel end part 41 and the shut-off pin 5 may be the star shape including the plurality of acute corner portions 411, the polygonal shape including the plurality of corner portions 411, as described above (refer to Figures 5 and 6).

Various cross sectional shapes which the channel end parts 41 of the nozzle part 4 may have, can be turned into formulation to obtain the equivalent diameter D(mm). That is, the equivalent diameter D can be obtained on the basis of the equation of D = 4S/B by using an opening area S of the channel end part 41 and a wetted perimeter B of the channel end part 41. The wetted perimeter B is a perimeter of a channel wall surface of the channel end part 41. For example, in case the cross section of the channel end part 41 is formed into a star shape including four acute corner portions 411, as shown in Figure 5, the wetted perimeter B is represented by the sum of the length of eight sides forming the four acute corner portions 411.

The equivalent diameter D of the channel end part 41 of the nozzle part 4 preferably falls within the range of 0.1 to 10 mm. If the equivalent diameter is less than 0.1 mm, the channel end part 41 becomes excessively thin to cause a large loss of the pressure that acts on the shaping material 81 passing through the channel end part 41. Thus, there is a risk that it may become difficult to eject the shaping material 81 from the channel end part 41. On the other hand, if the equivalent diameter D exceeds 10 mm, the channel end part 41 becomes too thick. Thus, there is a risk that the ejection amount of the shaping material 81 to be ejected from the channel end part 41 may not be constant.

As for the stop position x of the tip end 501 of the shut-off pin 5 at the time of closing the channel end part 41, it is preferable to be at a position of a tip 411 of the channel end part 41, to be positioned inside E1 apart from the tip 411 of the channel end part 41 by 3D(mm), or to be positioned outside E2 apart from the tip 411 of the channel end part 41 by 6D(mm).

If the stop position x of the tip end 501 of the shut-off pin 5 at the time of closing the channel end part 41 is positioned inside E1 apart from the tip 411 of the channel end part 4 by more than 3D(mm), there is a risk that the shaping material 81 ejecting from the channel end part 41 cannot be satisfactorily separated from the shaping material 81 remaining in the channel end part 41, and the part of the shaping material 81 may extend from the channel end part 41 in a stringing state.

If the stop position x of the tip end 501 of the shut-off pin 5 is positioned inside E1 apart from the tip 411 of the channel end part 4 by more than 3D(mm), the length of the tip end part of the channel end part 41 that is positioned at its tip end side than the stopping position x of the tip end 501 of the shut-off pin 5 is made larger than it need be at the time when the shut-off pin 5 closes the channel end part 41. Therefore, it is considered that the shaping material 81 remaining in the tip end part of the channel end part 41 tends to easily flow out from the tip 411 of the channel end part 41 in a stringing state.

On the other hand, if the stop position x of the tip end 501 of the shut-off pin 5 at the time when the shut-off pin 5 closes the channel end part 41 is positioned outside E2 apart from the tip 411 of the channel end part 4 by more than 6D(mm), the distance between the tip 411 of the channel end part 41 and the stage 12 is made larger than it need be, in order to avoid collision between the shut-off pin 5 and the stage 12. Thus, there is a risk that the shaping precision in the three-dimensional object 8 may be deteriorated.

Next, the method for manufacturing the three-dimensional object 8 using the manufacturing apparatus 1, and its operational effects will be described.

In the manufacturing apparatus 1 for the three-dimensional object 8 and the manufacturing method, various shaped three-dimensional objects 8 are shaped from pieces of the shaping material 81 having a various length. The control computer 14 of the manufacturing apparatus 1 controls a length of the shaping material 81 to be ejected from the channel end part 41 of the nozzle part 4 by intermittently ejecting the shaping material 81 from the channel end part 41 of the nozzle part 4 in accordance with an intended shape of the three-dimensional object 8.

In order to intermittently eject the shaping material 81, the control computer 14 performs an operation to temporarily stop ejection of the shaping material 81, and an operation to restart the ejection of the shaping material 81. As shown in Figure 2, in order to temporarily stop the ejection of the shaping material 81 from the nozzle part 4, the control computer 14 controls the actuator 51 to slide the position of the shut-off pin 5 toward outside E2 with respect to the channel end part 41. Consequently, the channel end part 41 is closed by the shut-off pin 5, and at the same time the shaping material 81 ejected from the channel end part 41 is disrupted from the shaping material 81 remaining inside of the channel end part 41 by the shut-off pin 5. When the shaping material 81 is disrupted, the tip 501 of the shut-off pin 5 is positioned inside E1 from the position of the tip 411 of the channel end part 41 by 3D(mm) or less and outside E2 from the position of the tip 411 of the channel end part 41 by 6D (mm) or less. In this way, when the channel end part 41 is closed by the shut-off pin 5, part of the shaping material 81 can be prevented from flowing out from the channel end part 41 in a stringing state.

As described above, the manufacturing apparatus 1 for the three-dimensional object 8 and the manufacturing method make it possible for the part of the shaping material 81 to hardly adhere to the three-dimensional object 8 in a stringing state by properly setting the positional relation between tip 411 of the channel end part 41 and the tip 501 of the shut-off pin 5 at the time of closing the channel end part 41.

In addition, the relative movement device 13 relatively moves the stage 12 and the material supply unit 11 in three dimensions, and ejection of the shaping material 81 and temporary stop of the ejection are repeated alternately, so that the shaping material 81 is accumulated to produce the three-dimensional object 8 as intended.

Thus, the manufacturing apparatus 1 and method for the three-dimensional object 8, and the material supply unit 11 to be used in the manufacturing apparatus 1 for the three-dimensional object 8 make it possible to obtain the three-dimensional object 8 that is formed of the accumulated shaping material 81 as intended, and makes it possible to hardly form an unnecessary portion on the surface of the three-dimensional object 8.

Here, the feeding part 3 in the material supply unit 11 may be constituted by a piston configured to slide inside of the cylinder 2 instead of the screw 31. In addition, the feeding part 3 may be constituted by a roller or the like configured to feed the shaping material 81 in a filament shape (in a long length shape). The feeding part 3 may be configured in various ways to eject the shaping material 81.

Further, as shown in Figure 3, at least one of the channel end part 41 of the nozzle part 4, an outer end part 43 and 44 of the nozzle part 4, and a tip portion 52 of the shut-off pin 5 may be subjected to release treatment for inhibiting adhesion of the shaping material 81. The outer end part 43 of the nozzle part 4 can be defined as a part positioned on the outer periphery side with respect to the channel end part 41, and the outer end part 44 can be defined as a tip end of the nozzle part 4. The tip portion 52 of the shut-off pin 5 can be defined as a portion of the shut-off pin 5 located inside of the channel end part 41, a portion of the shut-off pin 5 positioned at the tip end side than the portion located inside of the channel end part 41, the tip 501 of the shut-off pin 5, and the like.

The release treatment may be performed in various ways that make it possible to inhibit adhesion of the shaping material 81. The release treatment can be performed by a coating treatment with a release agent, a plating treatment, a vapor deposition treatment, a surface processing treatment, or the like. The release agent may be an agent containing a fluorocarbon resin, a silicone resin, a ceramic, or the like. The plating treatment may be performed by, for example, metal plating, or composite metal plating using a fluorocarbon resin, a silicone resin or the like. The vapor deposition treatment may be film deposition of DLC (diamond-like carbon) or the like by CVD (chemical vapor deposition). The surface processing treatment may be performed by surface roughening, or the like.

Performing the release treatment makes it possible for the shaping material 81 to more hardly flow out from the channel end part 41 in a stringing state at the time of temporarily stopping the ejection of the shaping material 81.

Although not shown in a figure, the material supply unit 11 may have a plurality of the cylinders 2 to which the nozzle part 4 can be connected. In this case, the shaping materials 81 to be stored in the plurality of the cylinders 2 can be made different each other, and which makes it possible to shape the three-dimensional object 8 composed of the shaping materials 81 that differ in quality of material and/or in color.

### Embodiment 2

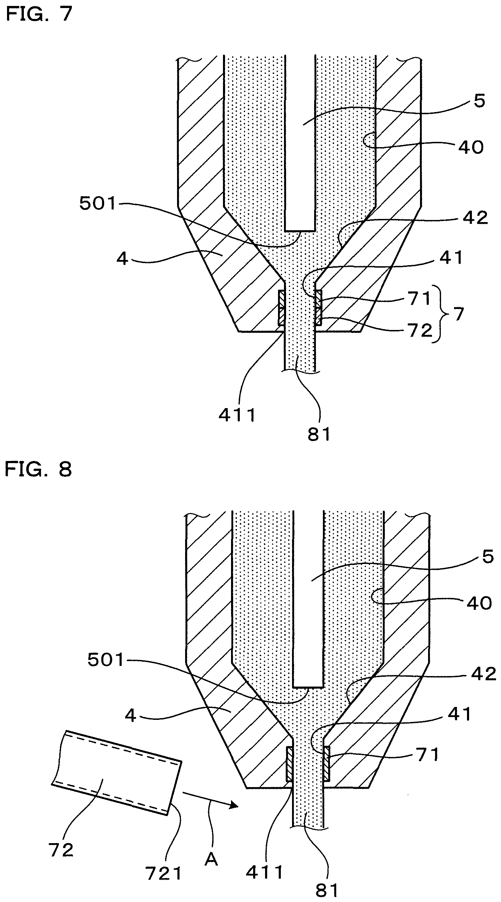

The present embodiment, as shown in Figure 7, shows the manufacturing apparatus 1 the nozzle part 4 of which is provided with a temperature control device 7 configured to control a temperature of the channel end part 41 of the nozzle part 4.

The temperature control device 7 may be composed of heating means 71 configured to heat the shaping material 81 inside of the nozzle part 4, and cooling means 72 configured to cool the shaping material 81 inside of the nozzle part 4. In this case, the control computer 14 makes it possible to heat the shaping material 81 inside of the nozzle part 4 by the heating means 71 at the time of ejecting the shaping material 81 from the channel end part 41 of the nozzle part 4, and on the other hand, to cool the shaping material 81 inside of the nozzle part 4 by the cooling means 72 at the time of temporarily stopping the ejection of the shaping material 81 from the channel end part 41 of the nozzle part 4.

The heating means 71 may be constituted by electrical heating means, or the like. The cooling means 72 may be constituted by, for example, air-cooling means configured to cool the shaping material 81 by blowing cooling air, water-cooling means configured to cool the shaping material 81 by flowing cooling water around the nozzle part 4, or a Peltier element utilizing Peltier effect that allows heat transfer when a current is flowing through a joint between two kinds of metals.

In addition, the nozzle part 4 may be provided with a temperature sensor for measuring a temperature of the shaping material 81 passing through the nozzle part 4. In this case, the control computer 14 can operate the temperature control device 7 to properly control the temperature of the current end part 41 of the nozzle part 4, which is measured by the temperature sensor.

The temperature control device 7 may be constituted only by the cooling means 72 for cooling the shaping material 81 inside of the nozzle part 4 with no use of the heating means 71. In this case, the cooling means 72 makes it possible to cool the shaping material 81 inside of the nozzle part 4 at the time of temporarily stopping ejection of the shaping material 81 from the channel end part 41 of the nozzle part 4.

Further, as shown in Figure 8, the cooling means 72 may be a blower that blows a gas A such as the cooling air or the like onto the channel end part 41 from outside thereof in order to adjust the temperature of the channel end part 41 of the nozzle part 4. The blower may be structured to have an opening 721 for blowing out the gas A fed from a compressor or the like which is not shown in a figure, at the end thereof. The blower makes it possible to cool the shaping material 81 that has been ejected from the channel end part 41 of the nozzle part 4 and accumulated on the stage 12. In addition, a protecting cover may be provided around the nozzle part 4 in the material supply unit 11.

Also in the present embodiment, other configurations and elements shown by the numerals in figures are identical to those in Embodiment 1, and operational effects similar to those in Embodiment 1 can be obtained.

### Embodiment 3

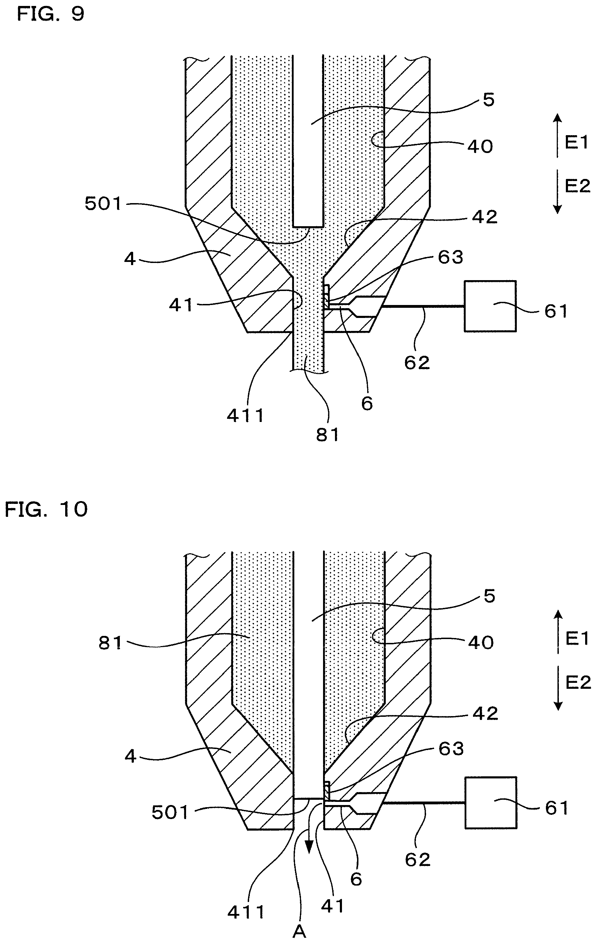

The present embodiment, as shown in Figures 9 and 10, shows the manufacturing apparatus 1 the nozzle part 4 of which is provided with a gas blowing port 6 configured to blow the gas A onto the shaping material 81 passing through the inside of the channel end part 41 of the nozzle part 4.

The gas blowing port 6 is connected to a gas supply source 61 through a piping 62. The gas supply source 61 may be a compressor or the like that generates a positive pressure air. The gas blowing port 6 may be provided with a switching mechanism 63 for gas for opening/closing the gas blowing port 6. The switching mechanism 63 for gas may be a pin that slides in a central axial direction of the gas blowing port 6 to open/close the gas blowing port 6, or a valve that slides in a direction orthogonal to the central axial direction of the gas blowing port 6 to open/close the gas blowing port 6.

In order to eject the shaping material 81 from the channel end part 41 of the nozzle part 4, the control computer 14, as shown in Figure 9, controls the shut-off pin 5 to move back toward inside E1 from the channel end part 41, and controls the switching mechanism 63 for gas to close the gas blowing port 6. On the other hand, in order to temporarily stop the ejection of the shaping material 81 from the channel end part 41 of the nozzle part 4, the control computer 14, as shown in Figure 10, controls the switching mechanism 63 for gas to open the gas blowing port 3, and simultaneously controls the shut-off pin 5 to move forward to outside E2 so as to close the channel end part 41.

At this time, the gas A is blown from the gas blowing port 6 onto the shaping material 81 passing through the inside of the channel end part 41, so that the shaping material 81 is cooled and disrupted by the gas A having a temperature lower than that of the shaping material 81. Thus, the shaping material 81 can be more easily disrupted by sliding the shut-off pin 5 and applying the pressure of the gas A blown from the gas blowing port 6.

Also in the present embodiment, other configurations and elements shown by the numerals in figures are identical to those in Embodiment 1, and operational effects similar to those in Embodiment 1 can be obtained.

### Working Example

A working example of the manufacturing apparatus 1 for the three-dimensional object 8 according to the present invention will be specifically described below. However, the present invention is not limited to this example.

### <Manufacturing Apparatus>

In the present working example, the manufacturing apparatus 1 for the three-dimensional object 8 shown in Figures 1 to 4 was used to manufacture the three-dimensional object 8 with necessary modification on the stop position x of the tip 501 of the shut-off pin 5, and to perform evaluation of the stringing state and shaping precision. Here, the channel end part 41 of the nozzle part 4 was formed into a circular shape, and the equivalent diameter D of the channel end part 41 of the nozzle part 4 was set to ø1 mm, and the diameter of the shut-off pin 5 was set to ø1 mm. The channel end part 41 of the nozzle part 4, the outer end parts 43 and 44 of the nozzle part 4, and the tip portion 52 of the shut-off pin 5 have a DLC (diamond-like carbon) film formed thereon as release treatment.

A stop position x of the tip 501 of the shut-off pin 5 was varied to be -5 mm, -3 mm, -1 mm, 0 mm, 1 mm, 3 mm, 5 mm, and 7 mm. And, a distance between the channel end part 41 of the nozzle part 4 and the stage 12 was set to 0.6 mm in the case when the stop position x of the tip 501 of the shut-off pin 5 is a negative value, and was set to a value resulting from adding 0.5 mm to the value of the stop position x in the case when the stop position x of the tip 501 of the shut-off pin 5 is a positive value.

The control computer 14 in the manufacturing apparatus 1 controlled the shut-off pin 5 to slide outside E2, thus stopping ejection of the shaping material 81 for 0.1 second, and to slide inside E1, thus ejecting the shaping material 81 for 30 seconds. Such stop and ejection states were repeated 100 times. Here, an ejection rate of the shaping material 81 was set to 0.5 kg/h, and a temperature of the shaping material 81 at the nozzle part 4 was set to 130°C. As for the shaping material 81, soft thermoplastic elastomer was used.

### <Evaluation Conditions>

Evaluations of a stringing state and shaping precision in shaping a three-dimensional object were performed as follows.

As for the stringing state, cases in which no stringing was observed, were assessed as "A"; case in which stringing was observed a little but the three-dimensional object was shaped, was assessed as "B", case in which stringing was observed a lot, and the three-dimensional object was not successfully shaped, was assessed as "C".

As for the shaping precision, cases in which the three-dimensional object 8 was successfully shaped in conformity with its design drawing, were assessed as "A"; cases in which part of the three-dimensional object 8 was not shaped in conformity with its design drawing because of its deformation, defect or adhesion, were assessed as "B"; and case in which the three-dimensional object 8 was not shaped at all, was assessed as "C".

Evaluation results of the stringing state and the shaping precision are shown in Table 1.

### Table 1

**(Table 1)**

| Stop Position of Tip of Shut-off Pin x(mm) | Stringing State | Shaping Precision |
|---|---|---|
| -5 | C | B |
| -3 | B | A |
| -1 | A | A |
| 0 | A | A |
| 1 | A | A |
| 3 | A | A |
| 5 | A | B |
| 7 | A | C |

In said table, in the case in which the stop position x of the tip 501 of the shut-off pin 5 was -5 mm that is less than -3 × D (1 mm), a lot of stringing was observed, and the three-dimensional object 8 was not successfully shaped as required. On the other hand, in the case in which the stop position x of the tip 501 of the shut-off pin 5 was 7 mm that is more than 6 × D (1 mm), the shaping precision deteriorates, and thus the three-dimensional object 8 was not successfully shaped as required. From these results, it was found that the stop position x (mm) preferably satisfies a relation of -3D≦x≦ 6D in the case in which the equivalent diameter D of the channel end part 41 of the nozzle part 4 is, for example, ø1 mm.

In some cases, it is preferable that the stop position x(mm) of the tip 501 of the shut-off pin 5 satisfies a relation of -D≦x≦10(mm) in the case in which the equivalent diameter D of the channel end part 41 of the nozzle part 4 is, for example, ø10 mm or other.

## Claims

1. A manufacturing apparatus for a three-dimensional object comprising:
a material supply unit that has a nozzle part configured to eject a shaping material for shaping the three-dimensional object;
a stage on which the shaping material ejected from a channel end part of the nozzle part is to be accumulated;
a relative movement device that is configured to relatively move the stage and the material supply unit in three dimensions; and
a control computer that is configured to control operation of the relative movement device, wherein
the nozzle part is provided with a shut-off pin configured to open and close the channel end part of the nozzle part from an inside thereof,
the control computer is configured to control the shut-off pin to close the channel end part of the nozzle part so as to temporarily stop ejection of the shaping material and to open the channel end part of the nozzle part so as to eject the shaping material, and
the channel end part of the nozzle part has an equivalent diameter D(mm) expressed by an equation of D = 4S/B using an opening area S(mm²) of the channel end part and a wetted perimeter B(mm) as a perimeter of a channel wall surface of the channel end part, a tip of the shut-off pin is stopped at a stop position x(mm) to allow the shut-off pin to close the channel end part, and the equivalent diameter D and the stop position x satisfy a relation of -3D≦x≦6D wherein the stop position x is set to 0(mm) as a reference in case the stop position x is at a tip position of the channel end part, the stop position x is set to a negative value in case the stop position x is positioned inside of the tip position of the channel end part, and the stop position x is set to a positive value in case the stop position x is positioned outside of the tip position of the channel end part.

2. The manufacturing apparatus according to claim 1, wherein the stop position x(mm) of the tip of the shut-off pin satisfies a relation of -D≦x≦10(mm).

3. The manufacturing apparatus according to claim 1 or 2, wherein the equivalent diameter D(mm) satisfies a relation of 0.1 (mm) ≦D≦ 10 (mm) .

4. The manufacturing apparatus according to any one of claims 1 to 3, wherein the channel end part of the nozzle part is formed as a part, a cross section area of which is minimum in an end part of a material channel configured to allow the shaping material to pass therethrough.

5. The manufacturing apparatus according to any one of claims 1 to 4, wherein
the material supply unit comprises a cylinder part configured to store the shaping material, and a feeding part configured to feed the shaping material stored in the cylinder part, and
the nozzle part is configured to eject the shaping material fed by the feeding part.

6. The manufacturing apparatus according to any one of claims 1 to 5, wherein the nozzle part is provided with a temperature control device configured to control a temperature of the channel end part of the nozzle part.

7. The manufacturing apparatus according to any one of claims 1 to 6, wherein at least one of the channel end part of the nozzle part, an outer end part of the nozzle part, and a tip portion of the shut-off pin is subjected to release treatment for inhibiting adhesion of the shaping material.

8. The manufacturing apparatus according to any one of claims 1 to 7, wherein
the nozzle part is provided with a gas blowing part configured to blow a gas onto the shaping material passing through an inside of the channel end part of the nozzle part, or the shaping material ejected from the channel end part of the nozzle part,
the control computer is configured to control the gas blown onto the shaping material from the gas blowing port to disrupt the shaping material while cooling it at a time of temporarily stopping ejection of the shaping material.

9. A manufacturing method for a three-dimensional object comprising using a manufacturing apparatus for the three-dimensional object, the manufacturing apparatus comprising:
a material supply unit that has a nozzle part configured to eject a shaping material for shaping the three-dimensional object;
a stage on which the shaping material ejected from a channel end part of the nozzle part is to be accumulated;
a relative movement device that is configured to relatively move the stage and the material supply unit in three dimensions; and
a control computer that is configured to control operation of the relative movement device, wherein
the nozzle part is provided with a shut-off pin configured to open and close the channel end part of the nozzle part from an inside thereof, and the channel end part of the nozzle part has an equivalent diameter D(mm) expressed by an equation of D = 4S/B using an opening area S(mm²) of the channel end part and a wetted perimeter B(mm) as a perimeter of a channel wall surface of the channel end part, a tip of the shut-off pin is stopped at a stop position x(mm) to allow the shut-off pin to close the channel end part, and the equivalent diameter D and the stop position x satisfy a relation of -3D≦x≦6D wherein the stop position x is set to 0(mm) as a reference in case the stop position x is at a tip position of the channel end part, the stop position x is set to a negative value in case the stop position x is positioned at inside of the tip position of the channel end part, and the stop position x is set to a positive value in case the stop position x is positioned at outside of the tip position of the channel end part,
wherein the shaping material is ejected from the channel end part at a time of opening the channel end part of the nozzle part with the shut-off pin, and ejection of the shaping material is temporarily stopped at a time of closing the channel end part of the nozzle part with the shut-off pin, thereby manufacturing the three-dimensional object.

10. A material supply unit to be used in a manufacturing apparatus for a three-dimensional object, the manufacturing apparatus comprising: a stage on which the shaping material ejected from a channel end part of the nozzle part is to be accumulated; a relative movement device that is configured to relatively move the stage and the material supply unit in three dimensions; and a control computer that is configured to control operation of the relative movement device, and is configured to control the shut-off pin to close the channel end part of the nozzle part so as to temporarily stop ejection of the shaping material and to open the channel end part of the nozzle part so as to eject the shaping material, the material supply unit comprising:
a nozzle part that is configured to eject a shaping material for shaping the three-dimensional object; and
a shut-off pin that is provided in the nozzle part and is configured to open and close a channel end part of the nozzle part from an inside thereof,
wherein the channel end part of the nozzle part has an equivalent diameter D(mm) expressed by an equation of D = 4S/B using an opening area S(mm²) of the channel end part and a wetted perimeter B(mm) as a perimeter of a channel wall surface of the channel end part, a tip of the shut-off pin is stopped at a stop position x(mm) to allow the shut-off pin to close the channel end part, and the equivalent diameter D and the stop position x satisfy a relation of -3D≦x≦6D wherein the stop position x is set to 0(mm) as a reference in case the stop position x is at a tip position of the channel end part, the stop position x is set to a negative value in case the stop position x is positioned inside of the tip position of the channel end part, and the stop position x is set to a positive value in case the stop position x is positioned outside of the tip position of the channel end part.
